# DEMANDE DE BREVET EUROPEEN

(11) **EP 1 148 017 A1**
(43) Date de publication de la demande: **24.10.2001**
(21) Numéro de dépôt: 01400988.0
(22) Date de dépôt: 18.04.2001
(51) Int. Cl.: B65H 75/48, H04R 1/10, B65H 75/44, H02G 11/02

(54) **Rembobineur de fils**

(30) Priorité: 21.04.2000 FR 0005265
(71) Demandeur: Anguille, Nicolas, 37380 Reugny (FR); De Paepe, Hugues, 37230 Fondettes (FR)
(72) Inventeur: Anguille, Nicolas, 37380 Reugny (FR); De Paepe, Hugues, 37230 Fondettes (FR)

(57) **Abrégé**

Dispositif de rembobinage automatique, de rangement et de conditionnement de tous les fils (9) souples notamment des fils (9) d'écouteurs. C'est un système purement mécanique avec comme source d'énergie de rembobinage un ressort de torsion à spirales (8) et un ressort de compression (4).

Ce système fonctionne grâce à un ressort de torsion à spirales (8) et s'arme en tirant sur les fils (9) souples. Cette action permet d'emmagasiner l'énergie. Ce ressort (8) est monté sur le boîtier inférieur (1) et dans une rainure du tambour (7). Le tambour (7) et la prise jack mâle (6) sont en rotation par rapport au boîtier inférieur (1). L'énergie emmagasinée est stockée de par un bouton (2) qui vient se bloquer dans un des crans du tambour (7) grâce à sa forme. Le tambour (7) est libéré par une pression sur le bouton (2) qui est guidé par le tube (3) de guidage. Lorsque l'on appuie sur le bouton (2), on peut donc tirer sur les fils (9) souples afin de sélectionner la longueur de fils (9) désirée, ensuite, on relâche le bouton (2) qui revient en position initiale haute grâce à un ressort de compression (4). Après l'utilisation, il suffit de réappuyer sur le bouton (2), afin de libérer à nouveau le tambour (7) et de rembobiner les fils (9) souples automatiquement.

Le dispositif selon l'invention est particulièrement destiné aux fils (9) d'écouteurs, il peut-être adaptable à tous les types les fils souples étant susceptible de s'enrouler autour d'une pièce.

## Description

La présente invention concerne des fils d'écouteurs pour baladeurs étant dotés d'une entrée (la prise jack) et d'une sortie (les oreillettes), ainsi que tous les fils souples avec entrée et sortie.

C'est un système de conditionnement, c'est à dire de rangement et de protection à la fois des fils, des connexions soudées d'entrée et de sortie. C'est un système purement mécanique qui permet un rembobinage automatique et précis des fils.

L'idée de la présente invention est venue du fait de la difficulté de ranger des fils d'écouteurs sans les détériorer. Sur le marché, il existe actuellement des systèmes de boîtiers de rangement à force manuelle pour des fils d'écouteurs, ils ne permettent pas un rangement rapide et automatique des fils d'écouteurs.
On connaît quatre type de rembobineur de fils d'écouteurs automatique : US 5 422 957 A, GB 2 280 168 A, US 5 684 883 A et US 5 832 098 A; mais ils sont dotés de connexions électriques, ils peuvent donc tomber en panne.

Le dispositif décrit ici, selon la présente invention, permet de remédier à ces inconvénients puisqu'il est automatique et purement mécanique.
Il comporte selon une première caractéristique, un tambour qui reçoit des fils d'écouteurs, une prise jack mâle et un ressort de torsion à spirales qui lui, distribue la force de rembobinage automatique des fils.

Selon des modes particuliers de réalisation, la présente invention contient :
- un tambour qui permet le stockage des fils d'écouteurs et le maintien du ressort à spirales et de la prise jack.
- un ressort de torsion à spirales associé au tambour, qui permet le rembobinage des fils d'écouteurs.
- un boîtier inférieur qui reçoit l'ensemble des pièces et sur ce boîtier, un plot qui sert au blocage du ressort spiral.
- un bouton assure l'arrêt axial du tambour et en appuyant sur ce bouton, le tambour est libéré. Lorsque l'on tire sur les fils d'écouteurs tout en exerçant une pression sur ce bouton, le ressort spiral s'arme par l'intermédiaire de la rotation du tambour. Puis, lorsque que l'on réappuie sur le bouton pour libérer à nouveau le tambour, des fils se rembobinent automatiquement grâce au ressort.
- un ressort de compression permet le retour en position initiale du bouton.
- un tube de guidage assure le guidage en translation du bouton.
- un boîtier supérieur qui vient se positionner sur le dessus de l'ensemble, guidant le tambour en rotation, le bouton en translation et le tube de guidage du bouton.
- la prise jack mâle et les fils d'écouteurs assurent la liaison entre les oreilles de l'utilisateur et la prise jack femelle d'un appareil.

La présente invention concerne un dispositif pour rembobiner des fils souples automatiquement et mécaniquement avec une ou plusieurs entrées et une ou plusieurs sorties du type comportant un boîtier inférieur qui supporte et guide en rotation un tambour, un ressort qui est un ressort de torsion à spirales destiné au rappel du tambour, des écouteurs qui représentent l'entrée reliée à une prise jack qui représente la sortie, par l'intermédiaire des fils souples et un boîtier supérieur fermant l'ensemble caractérisé en ce que la prise jack est montée de façon fixe sur le tambour monté lui-même en rotation dans le boîtier inférieur.

Dans des modes particuliers de réalisation :
- le dispositif est caractérisé par un boîtier inférieur qui comporte un tube guidant un bouton permettant le blocage du tambour.
- le dispositif est caractérisé par au moins un cran situé sur le tambour dans lequel vient se loger le bouton.
- le dispositif est caractérisé par un ressort de compression permettant le retour en position initiale haute du bouton.
- le dispositif est caractérisé par une extrémité du ressort fixée dans une rainure du tambour et l'autre extrémité fixée au boîtier inférieur.

Les dessins annexés illustrent l'invention :
- la figure 1 représente en coupe, le dispositif de la présente invention en position tambour bloqué.
- la figure 2 représente en coupe, le dispositif de la présente invention en position tambour libéré, l'action de l'utilisateur étant représentée par la flèche.
- la figure 3 représente en coupe, le dispositif de blocage de la présente invention en vue de dessus en position tambour bloqué.

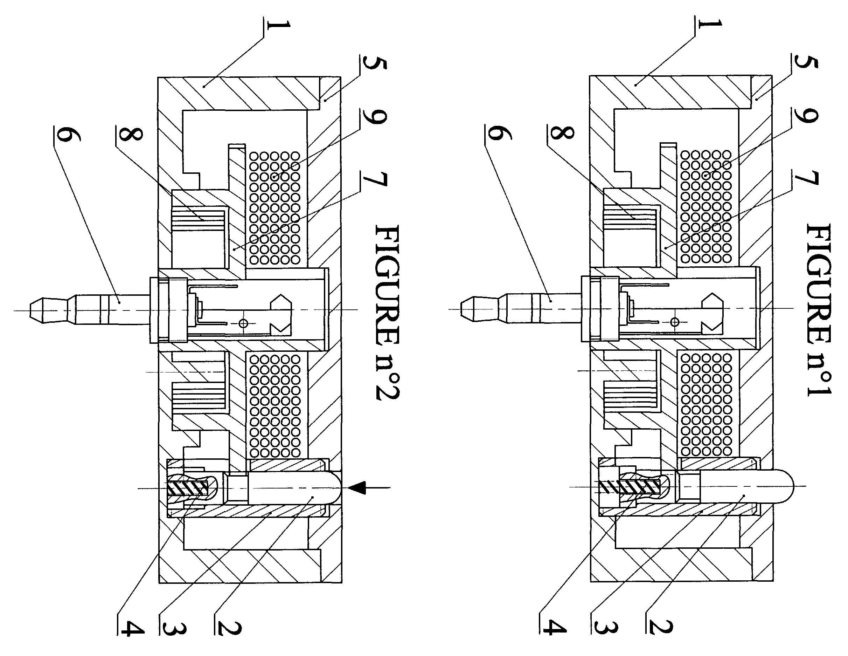

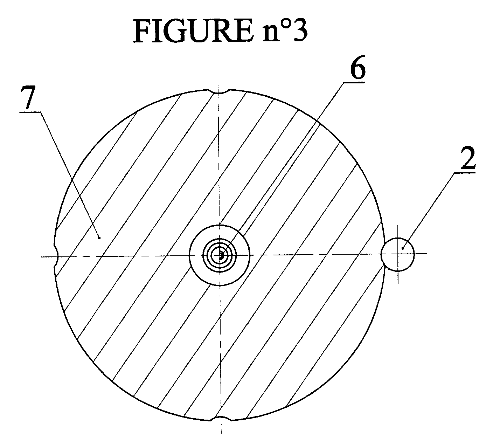

En référence à ces dessins, le dispositif comporte un boîtier inférieur (1) composé d'une partie supportant la rotation du tambour (7) ainsi que celle de la prise jack mâle (6), d'une autre partie composée d'un plot maintenant le ressort de torsion à spirales (8) qui distribue la force de rembobinage des fils (9) et d'une dernière partie recevant en encastrement le tube (3) de guidage du bouton. Un sous-ensemble de la présente invention permet le blocage du tambour qui comporte : un bouton (2), un tube (3) de guidage de ce bouton et un ressort de compression (4).

Le boîtier inférieur (1) de la présente invention permet donc principalement la rotation du tambour (7) dans un ajustement glissant réalisé grâce à un lamage, et le maintien du ressort de torsion à spirales (8).

Il reçoit aussi, grâce à un autre lamage, le tube (3) de guidage du bouton , le bouton (2) et le ressort de compression (4).

Dans la présente invention, le ressort spiral (8) s'arme grâce à la rotation du tambour (7), cette rotation est provoquée par l'utilisateur lorsqu'il tire sur les fils (9) d'écouteurs, tout en exerçant une pression sur le bouton (2). Le ressort de torsion à spirales (8) est monté sur le tambour (7) grâce à une rainure (partie mobile) d'une part, et enroulé autour d'un plot du boîtier inférieur (1) (partie fixe) d'autre part. Le tambour (7) est bloqué grâce à des crans où vient se positionner le bouton (2), maintenu en position haute grâce au ressort de compression (4).

Sous l'action de l'utilisateur sur le bouton (2), le tambour (7) est donc libéré. L'utilisateur a alors la possibilité de tirer sur les fils (9) d'écouteurs pour sélectionner la longueur de fils qu'il désire, puis, il relâche le bouton (2) qui bloque le tambour (7) dans l'un des crans prévus à cet effet. Lorsque l'utilisateur décide de rembobiner les fils (9), il lui suffit de réappuyer sur le bouton (2). Cette action provoque de nouveau la libération du tambour (7) qui, grâce au ressort spiral (8), permet le rembobinage automatique des fils (9) d'écouteurs autour du tambour (7).

A titre d'exemple non limitatif, les boîtiers auront des formes variables et des dimensions de l'ordre de 65 mm pour la longueur, 68 mm pour la largeur et 20 mm pour la hauteur lorsque l'invention est en position « utilisation ».

Le dispositif selon la présente invention est principalement destiné au rembobinage des fils (9) d'écouteurs. Mais, il peut avoir d'autres applications, notamment industrielles : il peut être adaptable à tous les types de fils souples bénéficiant d'une ou plusieurs entrées et d'une ou plusieurs sorties. Les différentes applications de la présente invention sont donc de manière non exhaustive : les fils de mesures électriques et d'alimentation, les fils de batteries (portables ou autres), les fils des kits « mains libres » avec une ou plusieurs oreillettes, les fils audio-vidéos, les fils de connexions informatiques, de transmission de données, bref, l'invention est utilisable pour tous les types de fils étant susceptibles de s'enrouler autour d'une pièce.

## Revendications

1. Dispositif pour rembobiner des fils (9) souples automatiquement et mécaniquement avec une ou plusieurs entrées et une ou plusieurs sorties du type comportant un boîtier inférieur (1) qui supporte et guide en rotation un tambour (7), un ressort (8) qui est un ressort de torsion à spirales destiné au rappel du tambour (7), des écouteurs qui représentent l'entrée reliée à une prise jack (6) qui représente la sortie, par l'intermédiaire des fils (9) souples et un boîtier supérieur (5) fermant l'ensemble **caractérisé en ce que** la prise jack (6) est montée de façon fixe sur le tambour (7) monté lui-même en rotation dans le boîtier inférieur (1).

2. Dispositif pour rembobiner des fils (9) souples automatiquement et mécaniquement selon la revendication 1 **caractérisé en ce que** le boîtier inférieur (1) comporte un tube (3) guidant un bouton (2) permettant le blocage du tambour (7).

3. Dispositif pour rembobiner des fils (9) souples automatiquement et mécaniquement selon la revendication 2 **caractérisé par** au moins un cran situé sur le tambour (7) dans lequel vient se loger le bouton (2).

4. Dispositif pour rembobiner des fils (9) souples automatiquement et mécaniquement selon l'une des revendications 2 ou 3 **caractérisé par** un ressort de compression (4) permettant le retour en position initiale haute du bouton (2).

5. Dispositif pour rembobiner des fils (9) souples automatiquement et mécaniquement selon l'une quelconque des revendications précédentes **caractérisé en ce qu'**une extrémité du ressort (8) fixée dans une rainure du tambour (7) et l'autre extrémité fixée au boîtier inférieur (1).
